Europäisches Patentamt

European Patent Office

Office européen des brevets

(11) Numéro de publication: **0 356 357**
**A1**

## DEMANDE DE BREVET EUROPEEN

(21) Numéro de dépôt: **89430021.9**

(22) Date de dépôt: **10.08.89**

(51) Int. Cl.⁵: **B 65 D 19/06**
B 65 D 85/46, B 65 G 1/137

(30) Priorité: **19.08.88 FR 8811145**

(43) Date de publication de la demande:
**28.02.90 Bulletin 90/09**

(84) Etats contractants désignés:
**BE CH DE ES GB IT LI LU**

(71) Demandeur: **Ferrua, Pierre**
**Vers Pont du Gard**
**F-30210 Remoulins (FR)**

(72) Inventeur: **Ferrua, Pierre**
**Vers Pont du Gard**
**F-30210 Remoulins (FR)**

(74) Mandataire: **Moretti, René et al**
**c/o Cabinet BEAU DE LOMENIE "Prado-Mermoz" 232,**
**Avenue du Prado**
**F-13008 Marseille (FR)**

(54) **Procédé de commercialisation de pièces préfabriquées et emballages-présentoirs pour la mise en oeuvre du procédé.**

(57) - L'invention a pour objet des procédés de commercialisation de pièces préfabriquées et des emballages-présentoirs pour la mise en oeuvre de ces procédés.

- Un emballage-présentoir (1) selon l'invention comporte une structure en bois composée d'une palette de manutention (2a) et de deux portiques (2b, 2c) et une caisse en carton (3) qui est encastrée dans la structure en bois et agrafée à celle-ci. La face avant (3a) comporte un tracé en pontillés (4) qui délimite deux triangles (5g, 5d), situés dans les angles supérieurs, portant un dessin (6) de la pièce contenue dans la caisse et un numéro de référence (7) de celle-ci. Le tracé en pointillés comporte des lignes horizontales ($8_1$, $8_2$, $8_3$, $8_4$) suivant lesquelles la face avant doit être découpée pendant la présentation à la vente en libre-service.

- Une application est la commercialisation en libre-service de pierres taillées pour la construction de cheminées.

Fig.1

Bundesdruckerei Berlin

**Description**

### Procédes de commercialisation de pièces préfabriquées et emballages-présentoirs pour la mise en oeuvre du procédé

L'invention a pour objet de nouveaux procédés de commercialisation de pièces préfabriquées, notamment de pièces relativement lourdes en pierre, béton ou terre cuite, destinées à permettre à chacun de construire lui-même un petit ouvrage, par exemple une cheminée.

L'invention a également pour objet des emballages destinés à la mise en oeuvre du procédé de commercialisation qui sont conçus pour contenir des pièces relativement lourdes, pour être gerbables et manipulables par chariots élévateurs et pour servir de présentoirs à la vente permettant à chaque client de se servir lui-même.

Un des objectifs de la présente invention est de simplifier la commercialisation des pièces préfabriquées, en pierre, en béton ou en terre cuite destinées à la construction de petits ouvrages tels que des cheminées, des barbecues, des bancs de jardin, des encadrements de portes ou de fenêtres, des bacs à fleurs, des margelles de puits etc. ... en vue de réduire le nombre de manutentions de ces pièces qui sont relativement lourdes.

Un autre objectif de la présente invention est de permettre de présenter à la vente des lots de pièces préfabriquées comportant un nombre relativement restreint de type de pièces tout en donnant aux clients la possibilité de choisir entre plusieurs modèles dont chacun est réalisable en utilisant certaines pièces contenues dans le lot.

Un autre objectif de la présente invention est de présenter à la vente des lots de pièces préfabriquées relativement lourdes dans un conditionnement qui permet la vente en libre-service.

Les objectifs de l'invention sont atteints par un procédé de commercialisation de pièces préfabriquées permettant de construire des petits ouvrages tels que des cheminées, lequel procédé comporte les opérations suivantes :
- on place les pièces préfabriquées dans plusieurs emballages-présentoirs gerbables et manutentionnables par chariot élévateur, en mettant dans chaque emballage des pièces indentiques qui sont rangées verticalement afin de pouvoir être extraites une par une par la face avant;
- on expédie lesdits emballages-présentoirs à un magasin de vente qui groupe et gerbe le long d'une allée de circulation un ensemble d'emballages-présentoirs contenant les pièces préfabriquées nécessaires à la construction d'un petit ouvrage;
- et on découpe dans la face avant en carton de chaque emballage une ouverture prédéterminée en fonction du type de pièce contenu dans ledit emballage pour laisser apparaître une seule rangée de pièces.

Selon un mode de réalisation préférentiel, on présente à la vente, dans un magasin libre-service, un ensemble d'emballages-présentoirs contenant un lot de pièces préfabriquées permettant de construire plusieurs modèles d'un même petit ouvrage, par exemple plusieurs modèles de cheminées, lequel lot comporte des pièces préfabriquées communes à plusieurs modèles et on présente, en même temps, au client des planches de dessin lui permettant de choisir un modèle, de noter les numéros de référence et le nombre de chaque pièce préfabriquée nécessaire à la construction de ce modèle et le client se sert lui-même dans lesdits emballages-présentoirs.

Les objectifs de l'invention sont atteints au moyen d'emballages-présentoirs qui comportent une structure en bois montée sur une palette de manutention et une caisse en carton posée sur ladite palette, à l'intérieur de ladite structure à laquelle elle est agrafée et la face avant de ladite caisse en carton porte un numéro de référence du type de pièce contenu dans l'emballage et un tracé en pointillés indiquant les découpes à effectuer en fonction des numéros de référence des pièces pour obtenir une ouverture laissant apparaître une seule rangée de pièces et permettre aux clients de sortir les pièces de l'emballage.

Selon un mode de réalisation préférentiel, la structure en bois comporte deux portiques qui encadrent la face avant et la face arrière de la boîte en carton et qui servent d'appui à la palette de l'emballage superposé.

Avantageusement un emballage-présentoir selon l'invention comporte des cavaliers en carton qui coiffent chaque pièce et qui sont fixés sur une cloison horizontale, lesquels cavaliers évitent que les pièces ne frottent les unes contre les autres et ne basculent lorsque les pièces voisines ont été enlevées.

Les pièces préfabriquées sont disposées verticalement en rangées horizontales dans chaque emballage-présentoir et avantageusement l'une des pièces de chaque rangée horizontale comporte une sangle permettant de l'extraire facilement de l'emballage.

L'invention a pour résultat de nouveaux moyens de conditionnement et de présentation à la vente de pièces préfabriquées en pierre, en béton ou en terre cuite,destinées à la constructions de petits ouvrages tels que par exemple des cheminées, des barbecues, des encadrements de portes ou de fenêtres, du mobilier de jardin en pierre, en béton, etc. ...

A ce jour on trouve dans des magasins de vente de matériaux de construction des pièces préfabriquées en béton, en pierre ou en terre cuite destinées à la construction de petits ouvrages. Ces pièces, qui sont relativement lourdes sont généralement présentées à l'extérieur du magasin et empilées en tas et ce mode de commercialisation entraîne des manutentions nombreuses et ne permet pas la vente en libre-service.

Les procédés selon l'invention permettent de présenter à la vente ces pièces préfébriquées dans des conditions qui réduisent au maximum les frais de transport et de manutention et qui permettent de vendre en libre-service.

Le constructeur, par exemple un fabricant de pierres taillées pour cheminées, place les pierres dans les emballages au départ de l'usine de préfabrication. Les opérations d'emballage sont facilitées du fait que chaque caisse contient des pièces identiques, ce qui permet un travail en série.

Les emballages-présentoirs peuvent être livrés directement au magasin de vente qui n'a plus qu'à les mettre en place avec un chariot élévateur le long d'une allée dans laquelles les clients circulent.

Les procédés selon l'invention permettent de regrouper un ensemble d'emballages-présentoirs contenant un lot de pièces préfabriquées dont certaines sont communes à plusieurs modèles, par exemple un lot de pierres taillées permettant de construire plusieurs modèles de cheminées qui peuvent comporter des parties communes, ce qui présente l'avantage de réduire le stock de pièces préfabriquées présentées à la vente et de permettre aux clients de prendre les pièces qui correspondent au modèle de leur choix.

Dans ce cas, des planches de dessin sont affichées qui représentent chaque modèle en indiquant la nomenclature des pièces composant celui-ci et chaque emballage-présentoir porte, sur sa face avant, le numéro du type de pièce qu'il contient, ce qui permet au client de prélever lui-même dans les caisses les pièces qui lui sont nécessaires pour construire son modèle.

La description suivante se réfère aux dessins annexés qui représentent, sans aucun caractère limitatif, des exemples d'emballages-présentoirs selon l'invention.

- La figure 1 est une vue en perspective d'un emballage fermé.

- La figure 2 est une vue en perspective d'un ensemble d'emballages selon l'invention groupés pour présenter aux clients un lot de pièces préfabriquées nécessaires à la construction d'un ouvrage.

- La figure 3 est une vue de face de deux emballages superposés.

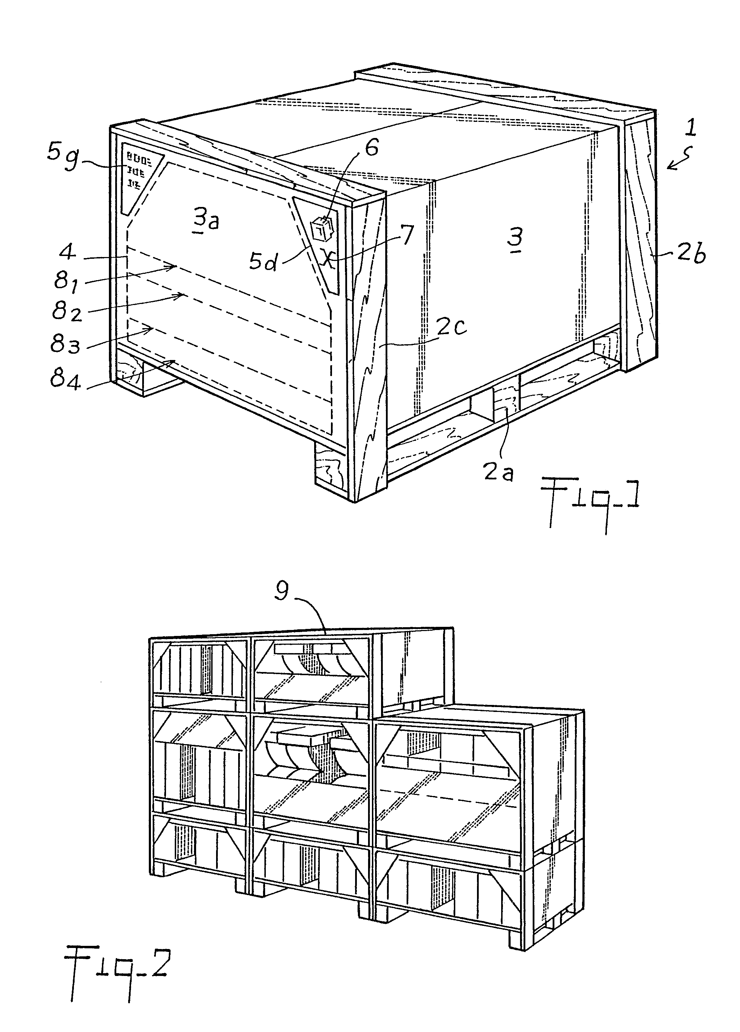

La figure 1 représente un emballage 1 selon l'invention qui est destiné au transport, à la manutention, au stockage et à la présentation à la vente de pièces lourdes, par exemple d'éléments préfabriqués en pierre ou en béton destinés à la construction d'une cheminée vendue en lot de pièces séparées prêtes à être montées.

L'emballage comporte une structure en bois composée d'une palette 2a permettant la manutention par des chariots élévateurs à fourches et de deux portiques verticaux identiques 2b et 2c, fixés respectivement à l'avant et à l'arrière de la palette 2a sur les côtés de celle-ci. Cette structure en bois est suffisamment résistante pour permettre de gerber plusieurs emballages. Dans ce cas, la palette de l'emballage supérieur prend appui sur les portiques 2b, 2c de l'emballage inférieur.

L'emballage comporte en outre une caisse en carton 3 qui est posée sur la palette 2a et qui est encastrée à l'intérieur des deux portiques 2b et 2c qui encadrent respectivement la face avant 3a et la face arrière de la caisse 3.

La face avant 3a est la face visible qui est dirigée vers l'allée de circulation des clients lorsque l'emballage est utilisé comme présentoir dans un magasin libre-service. La face avant 3a porte un tracé en pointillés 4 qui dessine les lignes suivant lesquelles la face avant doit être découpée. Le tracé 4 délimite deux triangles $5g$, $5d$, situés dans les deux angles supérieurs.

L'un de ces triangles, par exemple le triangle $5g$ contient des inscriptions indiquant par exemple le fabricant ou la marque du produit contenu dans l'emballage.

L'autre triangle $5d$ porte un dessin 6 qui représente la pièce contenue dans l'emballage et un chiffre 7 qui est le numéro de référence de cette pièce tel qu'il est indiqué par exemple dans un plan d'ensemble affiché dans le magasin de vente pour permettre aux clients de choisir les pièces vendues.

Le tracé en pointillés 4 comporte par exemple plusieurs lignes horizontales superposées $8_1$, $8_2$, $8_3$, $8_4$, qui correspondent aux découpes de la face avant qui doivent être réalisées selon le type des pièces contenues dans l'emballage. Par exemple la ligne $8_1$ correspond à la découpe à effectuer dans le cas où l'emballage contient des pièces No $X_1$ ou $X_2$ ou $X_n$ etc. ...

Les emballages-présentoirs selon l'invention sont conçus plus particulièrement pour présenter à la vente, dans des magasins en libre-service, un ensemble de pièces préfabriquées, par exemple des pierres taillées, nécessaires pour construire soi-même un modèle de cheminée déterminé.

Avantageusement on présente dans le même magasin des pièces préfabriquées permettant de construire plusieurs modèles de cheminée et certaines des pièces peuvent être communes à plusieurs modèles.

Par exemple on peut présenter à la vente dans le même magasin deux modèles de cheminée dont chacun est utilisable soit en foyer ouvert, soit avec un foyer fermé en fonte intégré à la cheminée et comporte au choix deux types de socles réalisés dans des pièces différentes, ce qui permet de présenter à la vente des pièces préfabriquées permettant de réaliser huit modèles différents.

Afin de réduire au maximum les frais de manutention, le fabricant remplit chaque emballage d'un lot de pièces identiques.

La figure 2 représente, à titre d'illustration, un ensemble d'emballages selon l'invention groupés et gerbés sur trois hauteurs, cet ensemble servant de présentoir à la vente en libre-service de pièces préfabriquées.

L'avantage de ces emballages réside dans le fait qu'il suffit de les manutentionner une seule fois pour les mettre en place dans le magasin en les regroupant comme le montre à titre d'exemple non limitatif la figure 2, puis de découper la face avant suivant le tracé indiqué en pointillés correspondant à la référence des pièces contenues dans chaque emballage et les clients se servent eux-mêmes en sortant de certains emballages le nombre de pièces voulues pour réaliser le modèle, par exemple le modèle de cheminée qu'ils désirent.

Bien entendu, on affiche dans le magasin des dessins de montage indiquant la nomenclature des pièces nécessaires pour réaliser chaque modèle. Ce mode de présentation à la vente permet d'éviter des manutentions répétées de caisses lourdes. Les pièces préfabriquées ont un poids tel qu'un homme puisse facilement les soulever pour les placer par exemple sur un chariot.

La figure 2 représente par exemple un groupe d'emballages utilisés comme présentoirs d'un ensemble de pierres taillées nécessaires pour construire les montants d'une cheminée.

On voit par exemple sur cette figure, en haut à droite, un emballage 9 qui contient, lorsqu'il est plein, huit pièces destinées à former chacune la partie supérieure de l'avancée en console d'un montant de cheminée. Ces pierres sont placées sur deux rangées superposées. L'emballage est représenté en début de vente. A ce moment-là, la face avant est découpée par exemple suivant la ligne $8_2$ pour ne laisser apparaître que la rangée supérieure de sorte que les clients se servent en prenant des pierres de cette rangée. Lorsque la rangée supérieure est épuisée, on découpe la face avant suivant la ligne $8_4$ pour faire apparaître la rangée inférieure.

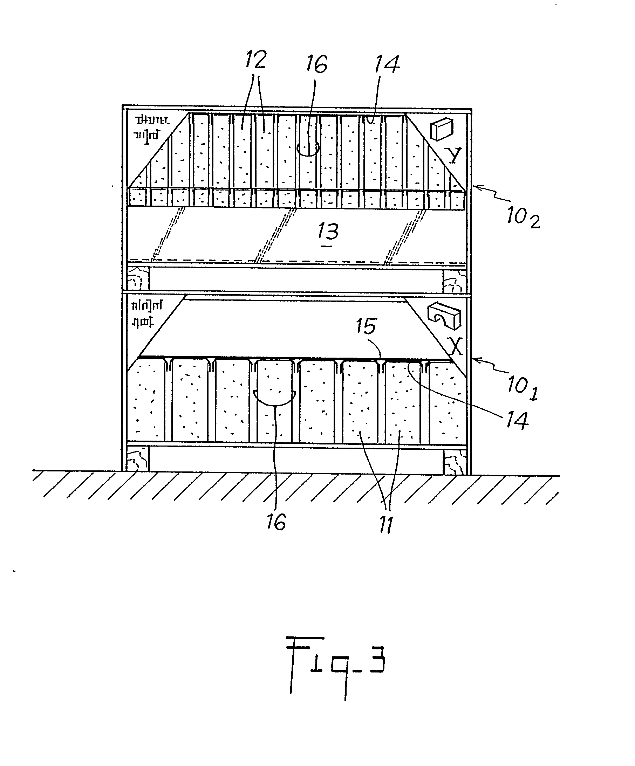

La figure 3 montre, à plus grande échelle, deux emballages selon l'invention $10_1$ et $10_2$ en position gerbés.

L'emballage inférieure $10_1$ contient par exemple huit pièces taillées identiques 11 disposées sur un seul niveau. La face avant de la caisse en carton de l'emballage inférieur est découpée suivant le trait inférieur.

L'emballage supérieur $10_2$ contient deux rangées superposées de pierres taillées identiques 12.

Au début de la vente, la face avant est découpée suivant la ligne $8_3$ de sorte qu'il subsiste sur la face avant un volet 13 qui masque en partie les pierres de la rangée inférieure.

Le bord supérieur de chaque pierre est coiffé par un cavalier en carton 14, qui est fixé sur une cloison horizontale 15. Les cavaliers 14 sont intercalés entre les plaques et évitent que celles-ci ne frottent l'une contre l'autre pendant les transports.

De plus lorsque certaines des pierres d'une rangée ont été enlevées, les cavaliers 14 évitent que les pierres restantes ne risquent de basculer.

On voit sur la figure 3 qur l'une des pièrres de chaque rangée, de préférence une pierre centrale, est équipée d'une sangle 16 qui permet de la retirer facilement de l'emballage.

Dans la description qui précède on s'est référé plus particulièrement à la vente de pierres taillées destinées à permettre à chacun de construire une cheminée de son choix parmi plusieurs possibilités. Il est précisé que cet exemple n'est pas limitatif. Les emballages-présentoirs selon l'invention peuvent être utilisés pour présenter à la vente, en libre-service, d'autres éléments préfabriqués relativement lourds,par exemple des éléments en béton ou en terre cuite ou en pierre destinés à construire soi-même des barbecues, des bacs à fleurs, des bordures de jardin etc....

## Revendications

1. Procédé de commercialisation de pièces préfabriquées en pierre, en béton ou en terre cuite destinées à la construction de petits ouvrages tels que des cheminées, caractérisé par la suite d'opérations suivantes :
- on place lesdites pièces préfabriquées (11, 12) dans plusieurs emballages présentoirs (1), gerbables et manutentionnables par chariots élévateurs, en mettant dans chaque emballage des pièces identiques qui sont disposées verticalement, sur une ou plusieurs rangées horizontales, de sorte qu'elles peuvent être extraites par la face avant;
- on expédie lesdits emballages-présentoirs à un magasin de vente qui groupe le long d'une allée de circulation un ensemble d'emballages-présentoirs contenant les pièces préfabriquées (11, 12) nécessaires à la construction d'un petit ouvrage;
- et on découpe dans la face avant en carton (3a) de chaque emballage une ouverture prédéterminée en fonction du type de pièce contenu dans ledit emballage afin de laisser apparaître une seule rangée horizontale de pièces.

2. Procédé selon la revendication 1, caractérisé en ce que l'on présente à la vente, dans un magasin en libre-service, un ensemble d'emballages-présentoirs (9) contenant un lot de pièces préfabriquées permettant de construire plusieurs modèles d'un même petit ouvrage, qui comportent des pièces communes à plusieurs modèles et on affiche dans le magasin des planches de dessin qui représentent les divers modèles et qui indiquent la nomenclature des pièces entrant dans la composition de chaque modèle et on inscrit sur la face avant de chaque emballage le numéro de référence (7) du type de pièces contenu dans l'emballage.

3. Emballage-présentoir (1) destiné à la commercialisation de pièces préfabriquées en pierre, en béton ou en terre cuite destinées à la construction de petits ouvrages tels que des cheminées, caractérisé en ce qu'ils comportent une structure en bois (2b, 2c) montée sur une palette de manutention (2a) et une caisse en carton (3) posée sur ladite palette à l'intérieur de ladite structure en bois à laquelle elle est agrafée, laquelle caisse en carton contient des pièces préfabriquées identiques (11, 12) qui sont disposées verticalement, sur une ou plusieurs rangées horizontales de sorte qu'elles peuvent être extraites par la face avant, laquelle porte un numéro de référence du type de pièce contenu dans la caisse et un tracé en pointillés ($8_1$, $8_2$, $8_3$, $8_4$) indiquant les découpes à effectuer correspondant aux divers numéros de référence afin d'obtenir une ouverture laissant apparaître une seule rangée de pièces et permettant aux clients de sortir les pièces de l'emballage.

4. Emballage-présentoir selon la revendication 3, caractérisé en ce que la structure en bois comporte deux portiques (2b, 2c) qui encadrent respectivement la face avant et la face arrière de la boîte en carton (3) et qui servent d'appui à la palette (2a) de l'emballage superposé.

5. Emballage-présentoir selon l'une quelconque des revendications 3 et 4, caractérisé en ce que la face avant (3a) comporte un tracé en pointillés qui définit des lignes de découpage du carton qui délimitent deux triangles (5g, 5d) situés dans les angles supérieurs dans lesquels apparaît un dessin (6) et le numéro de nomenclature (7) du type de pièce contenue dans l'emballage et éventuellement le nom ou la marque du fabricant.

6. Emballage-présentoir selon l'une quelconque des revendications 3 à 5, caractérisé en ce qu'il comporte des cavaliers en carton (14) qui coiffent le sommet de chaque pièce préfabriquée (11, 12) et qui sont fixés sur une cloison horizontale (15).

7. Emballage-présentoir selon l'une quelconque des revendications 3 à 6, caractérisé en ce que l'une des pièces préfabriquées de chaque rangée horizontale comporte une sangle (15) qui permet d'extraire facilement une première pièce de l'emballage.

Fig_1

Fig_2

Fig. 3

Office européen des brevets

**RAPPORT DE RECHERCHE EUROPEENNE**

Numero de la demande

EP 89 43 0021

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | GB-A-1 297 918 (M.E.L. EQUIPMENT CO.) * En entier * --- | 1,2 | B 65 D 19/06<br>B 65 D 85/46<br>B 65 G 1/137 |
| A | LU-A- 73 501 (AB BYGG-OCH TRANSPORTEKONOMI) * Page 4, ligne 9 - page 6, ligne 6; figures * --- | 1,2 | |
| A | FR-A-2 540 831 (CLERGEAU) * Pages 2,3; figures * --- | 1,2,3,5 | |
| A | US-A-1 638 563 (CARRUTH) * Page 1, ligne 26 - page 2, ligne 3; figures 1,2 * --- | 3,4 | |
| A | DE-A-2 716 632 (DEXION) --- | | |
| A | US-A-2 771 989 (WHITE) ----- | | |

| DOMAINES TECHNIQUES RECHERCHES (Int. Cl.5) |
|---|
| B 65 D |

Le présent rapport a été établi pour toutes les revendications

| Lieu de la recherche | Date d'achèvement de la recherche | Examinateur |
|---|---|---|
| LA HAYE | 16-11-1989 | MARTENS L.G.R. |